Europäisches Patentamt

European Patent Office

Office européen des brevets

(19)

(11) **EP 0 418 930 B1**

(12) **EUROPEAN PATENT SPECIFICATION**

(45) Date of publication and mention
of the grant of the patent:
**31.01.1996 Bulletin 1996/05**

(51) Int Cl.$^6$: **G11B 7/24**

(21) Application number: **90118221.2**

(22) Date of filing: **21.09.1990**

(54) **Recording medium and reproducing method therefor**

Aufzeichnungsmedium und Wiedergabemethode dafür

Milieu d'enregistrement et méthode de reproduction de celui-ci

(84) Designated Contracting States:
**DE FR GB**

(30) Priority: **22.09.1989 JP 246693/89**
**28.03.1990 JP 80125/90**

(43) Date of publication of application:
**27.03.1991 Bulletin 1991/13**

(73) Proprietors:
- **SANYO ELECTRIC CO., LTD.**
  **Moriguchi-shi, Osaka (JP)**
- **Irie, Masahiro**
  **Kasuga-shi, Fukuoka-ken (JP)**

(72) Inventors:
- **Tsujioka, Tsuyoshi**
  **Osaka-shi, Osaka-fu (JP)**

- **Tatezono, Fumio**
  **Hirakata-shi, Osaka-fu (JP)**
- **Matsuura, Koutaro**
  **Tsuzuki-gun, Kyoto-fu (JP)**
- **Irie, Masahiro**
  **Kasuga-shi, Fukuoka-ken (JP)**

(74) Representative: **Glawe, Delfs, Moll & Partner**
**D-80058 München (DE)**

(56) References cited:
**EP-A- 0 189 188          EP-A- 0 335 579**

- **PATENT ABSTRACTS OF JAPAN vol. 13, no. 75
  (P-831)21 February 1989 & JP-A-63 259 850**
- **PATENT ABSTRACTS OF JAPAN vol. 13, no.
  180 (P-864)27 April 1989 & JP-A-1 010 440**
- **PATENT ABSTRACTS OF JAPAN vol. 12, no.
  164 (M-698)18 May 1988 & JP-A-62 279 986**

**Description**

BACKGROUND OF THE INVENTION

Field of the Invention

The present invention relates to a recording medium which enables high-density recording, and a method of reproducing information recorded therein.

Background of the Invention

In recent years, an organic photochromic material of a photon mode has been studied as a material for a recording layer. When the photochromic material is exposed to light of a prescribed first wavelength, its molecular structure is changed by photochemical reaction. The changed molecular structure returns to the original one when the material is exposed to another light of a second wavelength. In response to such change of the molecular structure, absorptiveness of the material is also greatly changed with respect to beams of prescribed wavelengths.

The photochromic material having such a property can be applied to a recording layer of a recording medium in order to record information through a beam having the aforementioned first wavelength. Further, the information can be reproduced through a beam having the aforementioned second wavelength.

When such a reproducing method is employed, however, an already recorded portion of the recording layer absorbs the reproducing beam, and hence the molecular structure of the already recorded portion is unpreferably changed to that of an unrecorded state.

EP-A-0 189 188 discloses a recording medium including a substrate, a photosensitive layer and a reflecting layer. Information recorded in that photosensitive layer is represented by a colored image.

EP-A-0 335 579, which has been published on October 14, 1989, discloses a recording medium comprising a recording/birefringent layer for storing the information.

Japanese Patent Laying-Open Gazette No. 63-259850 discloses a reproducing method utilizing optical rotatory power of the photochromic material, as a method for solving such a problem. The term "optical rotatory power" indicates such a phenomenon that a prescribed material rotates the plane of polarization of a linearly polarized light beam which is introduced into and transmitted through the material. In the aforementioned photochromic material, presence/absence of such optical rotatory power depends on the aforementioned recorded/unrecorded state. Thus, it is possible to read information by a reader which is provided with means for detecting such rotation of the azimuth angle of the polarization. According to this method, further, it is possible to select a beam of a wavelength which is not in the least absorbed by the recording layer as a reproducing beam since optical rotatory power is also present in a region out of the band of absorbed wavelengths. Thus, it is possible to prevent the aforementioned erasing of information caused by the reproducing beam.

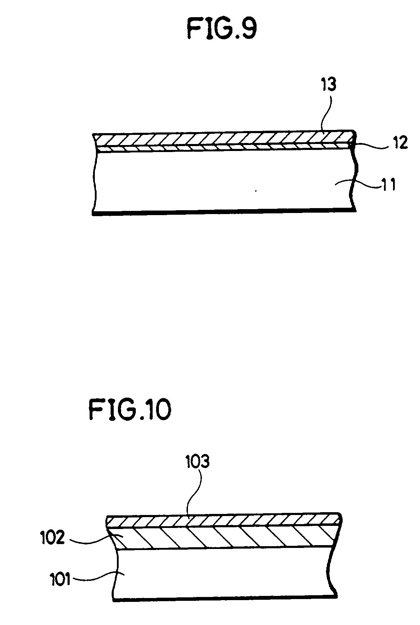

Fig. 10 is a sectional view showing a conventional recording medium which is disclosed in Japanese Patent Laying-Open Gazette No. 63-259850. Referring to Fig. 10, a recording layer 102 is formed on a transparent substrate 101, and a reflecting layer 103 is formed on the recording layer 102. The conventional recording medium shown in Fig. 10 records information by exposing the recording layer 102 to a beam of a specific wavelength and changing the molecular structure of the exposed portion.

In such a reflection type recording medium, however, it is impossible in principle to reproduce information through optical rotatory power. The reason for this is as follows:

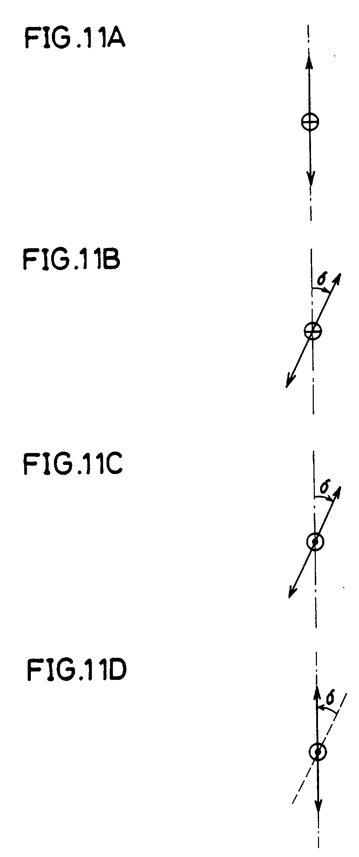

Figs. 11A to 11D illustrate states of rotation of the azimuth angle of the polarization of a linearly polarized light beam which is introduced into the conventional recording medium shown in Fig. 10.

Fig. 11A shows the plane of polarization of the beam which is incident upon the recording layer. Fig. 11B shows the plane of polarization of the beam, transmitted through the recording layer, which is on the point of being reflected by the reflecting layer. As shown in Fig. 11B, the plane of polarization of the beam is clockwisely rotated by an angle 6 as viewed from the substrate. Fig. 11C shows the plane of polarization of the beam just reflected by the reflecting layer. As shown in Fig. 11C, the plane of polarization of the beam is reflected in the state rotated by 6. Fig. 11D shows the plane of retransmitted through the recording layer. When the beam is thus retransmitted through the recording layer, its plane of polarization is anticlockwisely rotated by 6 as viewed from the substrate, since the reflected beam advances in a direction opposite to that of incidence. Consequently, the plane of polarization of the reproducing beam reflected from the recording medium returns to the state in incidence, as shown in Fig. 11D. In the conventional reflection type recording medium, therefore, it has been impossible in principle to reproduce information through optical rotatory power.

Also when a circularly or elliptically polarized light beam is employed, no change is caused in the polarized state of the reflected beam in response to the state of the recording layer, and hence it is impossible to reproduce information through optical rotatory power of the recording layer. In the recording medium of the conventional structure as shown in Fig. 10, therefore, no change is caused in the polarized state of the beam reflected from the recording medium, even if the recording layer has optical rotatory power. Thus, it has been impossible to read information through optical rotatory power.

SUMMARY OF THE INVENTION

An object of the present invention is to provide a recording medium of a reflection type which can reproduce information through optical rotatory power, and a method of reproducing the information.

This object is achieved by a recording medium according tc the independent claims 1 and 6 and by a method for reproducing information according to claim 11. The dependent claims are related to further advantages aspects of the present invention.

The birefringent layer can be formed by bringing a quarter-wave plate into close contact with the recording layer, for example. Further, the birefringent layer can be formed as a thin film by bringing the same into a columnar structure which is obliquely grown with respect to a substrate. In this case, a neutral axis is generated in the direction of growth of the columnar structure as viewed from the upper surface of the substrate. Such a thin film can be formed by vacuum deposition, sputtering or the like.

According to the present invention, the recording layer contains a material whose optical rotatory power is changed. The optical rotatory power can be changed by application of light, heating or the like. Alternatively, the optical rotatory power may be changed by change of an external field such as an electric field, a magnetic field or the like. Information is recorded by such change of the optical rotatory power.

A layer serving both as the recording layer and the birefringent layer is called a recording/birefringent layer in this specification.

The recording/birefringent layer can be formed by unidirectionally stretching a thin film which contains a material having optical rotatory power, for example. When the material having optical rotatory power is of monomer and/or oligomer introduced birefringence is small. In this case, a polymer material is contained in the thin film, in order to introduce large birefringence into the thin film. Alternatively, it is possible to employ another method, in order to introduce birefringence into the recording/birefringent layer.

In a preferred embodiment of the present invention, a linearly polarized light beam is employed for reproduction. According to this embodiment, the beam is preferably incident upon the recording medium so that the plane of polarization of the beam matches with the direction of a neutral axis of the birefringent layer of the recording medium.

The term "neutral axis" of the birefringent layer indicates a fast axis or a slow axis. The beam is so introduced into the recording medium that its plane of polarization matches with the direction of the fast axis or the slow axis of the birefringent layer of the recording medium.

The birefringent layer preferably has such a thickness that a retardation is $\pi/2$ with respect to the waveband of the polarized light beam serving as a reproducing beam.

The action of the present invention is now described.

When a recording medium has optical rotatory power, its optical rotatory power in Jones matrix representation is expressed as follows, assuming that $\delta$ represents the angle of polarization rotation:

$$\mathbb{R}(\delta) = \begin{pmatrix} \cos\delta & -\sin\delta \\ \sin\delta & \cos\delta \end{pmatrix} \qquad \cdots (1)$$

When a recording medium has a retardation action of a quarter-wave plate etc., this action is matrix-represented as follows, assuming that $\gamma$ represents the amount of retardation:

$$P(\gamma) = \begin{pmatrix} e^{i\frac{\gamma}{2}} & 0 \\ 0 & e^{-i\frac{\gamma}{2}} \end{pmatrix} \qquad \cdots (2)$$

The inventive recording medium has combination of such two actions and reflection. In general, the polarized state of a beam is matrix-represented as follows:

$$E_0 = \begin{pmatrix} E_x \\ E_y \end{pmatrix} = \begin{pmatrix} \alpha \\ \beta \end{pmatrix} \qquad \cdots (3)$$

When such a beam is introduced into the inventive recording medium, the same is subjected to the optical rotatory power by the recording layer as well as to the retardation action by the birefringent layer respectively, and then reflected by the reflecting layer. When the beam represented by the expression (3) is introduced into the recording medium, the beam which is on the point of being reflected by the reflecting layer is in the following polarized state, from the expressions (1) and (2):

$$E_1 = P(\gamma) \cdot R(\delta) \cdot E_0$$

$$= \begin{pmatrix} e^{i\frac{\Gamma}{2}} & 0 \\ 0 & e^{-i\frac{\Gamma}{2}} \end{pmatrix} \begin{pmatrix} \cos\delta & -\sin\delta \\ \sin\delta & \cos\delta \end{pmatrix} \begin{pmatrix} \alpha \\ \beta \end{pmatrix} \cdots (4)$$

Then, the reflected beam is retransmitted through the birefringent layer, and reintroduced into the recording layer. The beam currently incident upon the recording layer is subjected to the optical rotatory power by the recording layer again, while the direction of polarization rotation is opposite as viewed from the substrate since the beam advances oppositely to the above. In other words, the current angle of polarization rotation is -δ as viewed from the substrate. Such an optical rotatory power of -δ is matrix-represented as follows:

$$R(-\delta) = \begin{pmatrix} \cos\delta & \sin\delta \\ -\sin\delta & \cos\delta \end{pmatrix} \cdots (6)$$

Therefore, the polarized state of the reflected beam retransmitted through the recording layer can be expressed as follows:

$$E_2 = R(-\delta) \cdot P(\gamma) \cdot P(\gamma) \cdot P(\delta) \cdot E_0$$

$$= \begin{pmatrix} \cos\delta & \sin\delta \\ -\sin\delta & \cos\delta \end{pmatrix} \begin{pmatrix} e^{i\frac{\Gamma}{2}} & 0 \\ 0 & e^{-i\frac{\Gamma}{2}} \end{pmatrix} \begin{pmatrix} e^{i\frac{\Gamma}{2}} & 0 \\ 0 & e^{-i\frac{\Gamma}{2}} \end{pmatrix}$$

$$\begin{pmatrix} \cos\delta & -\sin\delta \\ \sin\delta & \cos\delta \end{pmatrix} \begin{pmatrix} \alpha \\ \beta \end{pmatrix}$$

$$= D(\delta, \gamma) \cdot E_1 \cdots (7)$$

It is understood from the expression (7) that the polarized state of the beam reflected by the recording medium can be changed from the state in incidence, in response to optical rotatory power of the recording layer and the retardation action of the birefringent layer.

When no optical rotatory power is caused in the recording layer, δ = 0, and hence δ = 0 is substituted in the expression (7) as follows:

$$E_2 = \begin{pmatrix} 1 & 0 \\ 0 & 1 \end{pmatrix} \begin{pmatrix} e^{i\gamma} & 0 \\ 0 & e^{-i\gamma} \end{pmatrix} \begin{pmatrix} 1 & 0 \\ 0 & 1 \end{pmatrix} \begin{pmatrix} \alpha \\ \beta \end{pmatrix}$$

$$= \begin{pmatrix} e^{i\gamma} & 0 \\ 0 & e^{-i\gamma} \end{pmatrix} \begin{pmatrix} \alpha \\ \beta \end{pmatrix}$$

$$= D(\gamma) \cdot E_1 \cdots (8)$$

Thus, the beam is influenced only by the birefringent layer. Comparing the expression (7) with the expression (8),

$$D(\delta, \gamma) \neq D(\gamma)$$

Hence, the polarized state $E_3$ of the reflected beam is varied with presence/absence of optical rotatory power in the recording layer. Thus, it is possible to read information from the recording medium by detecting the difference in the polarized state. Such difference of the polarized state can be detected by extracting the $E_3$ component of the reflected beam by a beam splitter and judging the value of this component, for example.

When the recording medium is provided with no birefringent layer similarly to the prior art, $\delta = 0$, and hence $\delta = 0$ is substituted in the expression (7) as follows:

$$E_3 = \begin{pmatrix} \cos^2 \delta + \sin^2 \delta & 0 \\ 0 & \sin^2 \delta + \cos^2 \delta \end{pmatrix} \begin{pmatrix} \alpha \\ \beta \end{pmatrix}$$

$$= \begin{pmatrix} 1 & 0 \\ 0 & 1 \end{pmatrix} \begin{pmatrix} \alpha \\ \beta \end{pmatrix}$$

$$= \begin{pmatrix} \alpha \\ \beta \end{pmatrix}$$

Hence, $E_3 = E_1$ and no difference in polarized state is caused between an incident beam and a reflected beam.

Description is now made on such case that a linearly polarized light beam is applied to a recording medium so that its plane of polarization matches with the neutral axis (fast axis or slow axis) of a birefringent layer, the thickness of which is set so that the retardation is $\pi/2$. Conditions in this case are expressed as follows:

$$E_1 = \begin{pmatrix} 1 \\ 0 \end{pmatrix} \quad \cdots (9)$$

$$\gamma = \frac{\pi}{2} \quad \cdots (10)$$

The expressions (9) and (10) are substituted in the expression (7), to attain the following expression:

$$E_3 = i \cdot \begin{pmatrix} \cos 2\delta & \sin 2\delta \\ -\sin 2\delta & \cos 2\delta \end{pmatrix} \begin{pmatrix} 1 \\ 0 \end{pmatrix}$$

$$= i \cdot \begin{pmatrix} \cos 2\delta & \sin 2\delta \\ -\sin 2\delta & \cos 2\delta \end{pmatrix} E_1 \quad \cdots (11)$$

The expression (11) indicates that the plane of polarization is rotated by $-2\delta$ as compared with that in incidence. If no optical rotatory power is caused in the recording layer in this case, $\delta = 0$ and hence the polarized state of the reflected beam is expressed as follows:

$$E_3 = i \cdot \begin{pmatrix} 1 & 0 \\ 0 & 1 \end{pmatrix} E_1$$

$$= i E_1 \quad \cdots (12)$$

In the expression (12), $\underline{i}$ indicates that the overall phase of the beam is shifted by $\pi/2$, and hence the polarized state of $E_3$ is not substantially different from $E_1$, which is the polarized state at the time of incidence.

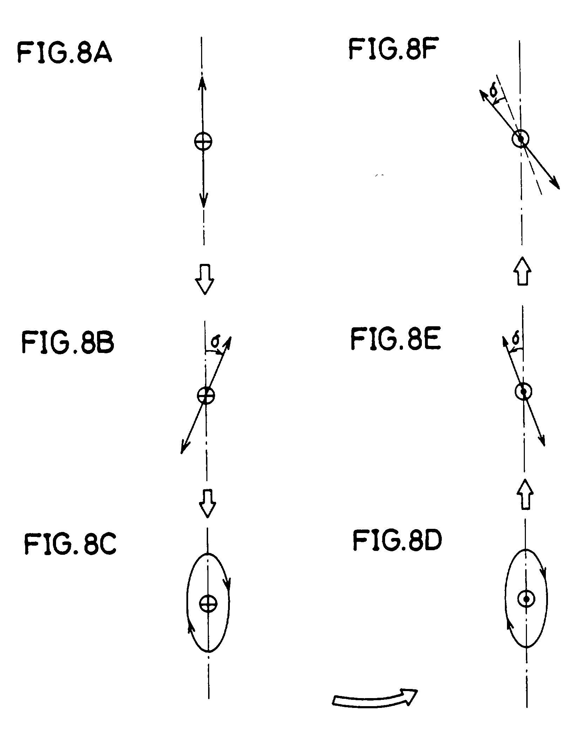

Figs. 8A to 8F illustrate states of rotation of the azimuth angle of the polarization of a polarized light beam in an embodiment of the present invention. A recording medium according to this embodiment is separately provided with a recording layer and a birefringent layer.

Fig. 8A shows the plane of polarization of the beam which is incident upon the recording layer. Referring to Figs. 8A to 8F, one-dot chain lines A denote the direction of the fast axis of the birefringent layer.

As shown in Fig. 8A, a linearly polarized light beam is so introduced into the recording medium that its plane of polarization matches with the direction of the fast axis of the birefringent layer.

Fig. 8B shows the plane of polarization of the polarized light beam transmitted through the recording layer to be incident upon the birefringent layer. As shown in Fig. 8B, the plane of polarization of the beam is clockwisely rotated by an angle $\delta$ after transmission through the recording layer.

Fig. 8C shows the plane of polarization of the beam, transmitted through the birefringent layer, which is on the point of being reflected by the reflecting layer. When the beam is incident upon the birefringent layer, a retardation of $\pi/2$ takes place between

$$\mathbb{E}_X$$

and

$$\mathbb{E}_Y$$

components of the beam, which in turn is changed to an elliptically polarized light beam as shown in Fig. 8C.

Fig. 8D shows the polarized light beam just reflected by the reflecting layer. The beam is reflected by the reflecting layer in the state of said elliptically polarized light beam.

Fig. 8E shows the beam which is retransmitted through the birefringent layer to be reintroduced into the recording layer. As shown in Fig. 8E, a retardation of $\pi/2$ again takes place in the beam after retransmission through the birefringent layer, to cause a retardation of $\pi$ in in the beam. Consequently, the beam is converted to a linearly polarized light beam whose plane of polarization is anticlockwisely rotated by $\delta$ with respect to the fast axis of the birefringent layer immediately before outgoing from the birefringent layer, as shown in Fig. 8E.

Fig. 8F shows the plane of polarization of the beam retransmitted through the recording layer. When the beam is thus reintroduced into the recording layer, its plane of polarization is anticlockwisely rotated by $\delta$ oppositely to the direction in incidence, since the beam advances oppositely to the direction in incidence. Consequently, the plane of polarization of the beam outgoing from the recording medium is anticlockwisely rotated by $2\delta$ as compared with that in incidence, as shown in Fig. 8F.

When the recording layer has no optical rotatory power, no rotation of the azimuth angle of the polarization as shown in Fig. 8B takes place. Thus, the beam is so introduced that its plane of polarization matches with the neutral axis of the birefringent layer, and hence the birefringent layer causes no change in polarized state. Consequently, the beam is reflected from the recording medium in the same polarized state as that in incidence.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a sectional view showing an embodiment according to the present invention;

Fig. 2 illustrates chemical structures of an exemplary material which is applicable to a recording layer in the present invention;

Fig. 3 illustrates absorptiveness of the exemplary material which is applicable to the recording layer in the present invention;

Fig. 4 schematically illustrates an exemplary optical system for reading information from a recording medium in the present invention;

Fig. 5 illustrates chemical structures of another exemplary material which is applicable to a recording layer in the present invention;

Fig. 6 illustrates chemical structures of still another exemplary material which is applicable to a recording layer in the present invention;

Fig. 7A illustrates a polarized state of a reflected light beam obtained when elliptically polarized light beam is applied onto a recording medium which is provided with a recording layer having no optical rotatory power;

Fig. 7B illustrates a polarized state of a reflected beam obtained when a circularly polarized light beam is applied onto a recording medium which is provided with a recording layer having optical rotatory power;

Figs. 8A to 8F illustrate states of rotation of the azimuth angle of the polarization of a polarized light beam in the embodiment according to the present invention, in which:

Fig. 8A shows the plane of polarization of the beam introduced into a recording layer,

Fig. 8B shows the plane of polarization of the beam transmitted through the recording layer to be incident upon a birefringent layer,

Fig. 8C shows the plane of polarization of the beam, transmitted through the birefringent layer, which is on the point of being reflected by a reflecting layer,

Fig. 8D shows the plane of polarization of the beam just reflected by the reflecting layer,

Fig. 8E shows the plane of polarization of the beam retransmitted through the birefringent layer to be reintroduced into the recording layer, and

Fig. 8F shows the plane of polarization of the beam retransmitted through the recording layer;

Fig. 9 is a sectional view showing another embodiment according to the present invention;

Fig. 10 is a sectional view showing an example of a conventional recording medium; and

Figs. 11A to 11D illustrate states of rotation of the azimuth angle of the polarization of a beam in the conventional recording medium shown in Fig. 10, in which:

Fig. 11A shows the plane of polarization of the beam introduced into a recording layer,

Fig. 11B shows the plane of polarization of the beam, transmitted through the recording layer, which is on the point of being reflected by a reflecting layer,

Fig. 11C shows the plane of polarization of the beam just reflected by the reflecting layer, and

Fig. 11D shows the plane of polarization of the beam retransmitted through the recording layer.

## DESCRIPTION OF THE PREFERRED EMBODIMENTS

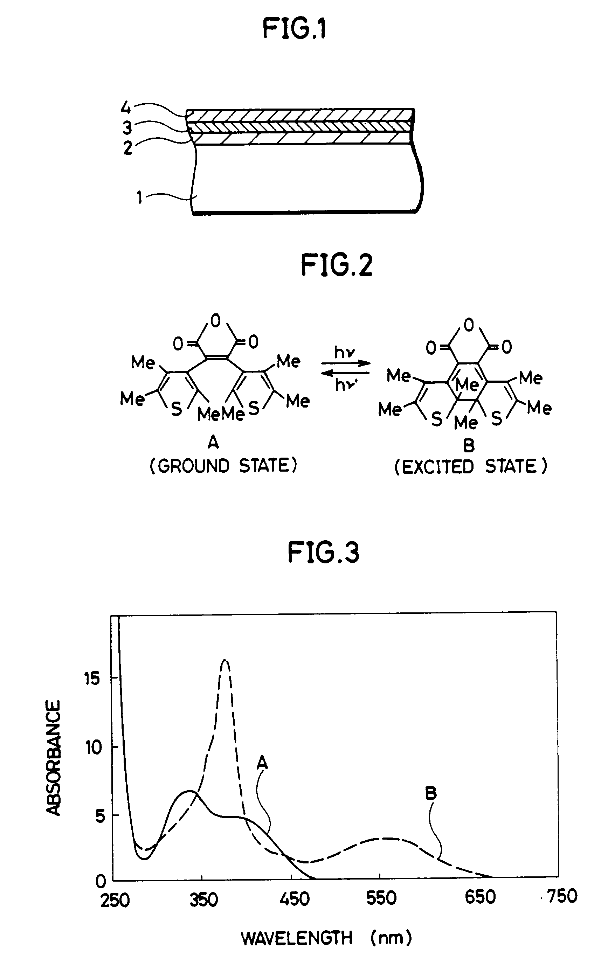

Fig. 1 is a sectional view showing a recording medium according to an embodiment of the present invention. Referring to Fig. 1, a recording layer 2 is formed on a substrate 1. A birefringent layer 3 is formed on the recording layer 2, and a reflecting layer 4 is formed on the birefringent layer 3. In this embodiment, the substrate 1 is made of quartz glass. A photochromic material is applied onto the substrate 1 by a spin coating method, to form the recording layer 2 in a thickness of 1 μm. A quarter-wave plate of artificial crystal is brought into close contact with the recording layer 2, to form the birefringent layer 3. Further, aluminum is vacuum-deposited on the birefringent layer 3 to form the reflecting layer 4 in a thickness of 1000 Å.

Fig. 2 shows the photochromic material for the recording layer 2. Referring to Fig. 2, the left part A shows a ground state and the right part B shows an excited state, while symbol Me represents methyl groups.

Fig. 3 illustrates absorptiveness of the photochromic material shown in Fig. 2. When the material is in the ground state (A), its absorption peak appears at a wavelength around 400 nm or 325 nm as shown in Fig. 3. Thus, the molecular structure of the material is changed to an excited state when the same is exposed to a beam whose wavelength is around 400 nm or 325 nm. When the material is in the excited state (B), on the other hand, its molecular structure is changed from the excited state to a ground state upon exposure to a beam whose wavelength is around 550 nm. This photochromic material exhibits no optical rotatory power when the same is in the ground state, while it exhibits optical rotatory power when the same is in the excited state.

Such a photochromic material was dissolved in methyl ethyl ketone (MEK), and polyvinyl butyral (PVB) was added thereto as a binder to obtain a solution, which was then applied onto a substrate.

A beam emitted from an incandescent lamp was filtered to selectively apply only a beam whose wavelength was longer than 500 nm to the recording medium shown in Fig. 1, thereby bringing the overall molecules of the photochromic material, forming the recording layer 2, into a ground state. Then, this recording medium was exposed to a beam from a semiconductor laser having a wavelength of 780 nm, which is hardly absorbed by a photochromic material, and rotation of the azimuth angle of the polarization was measured in the beam reflected from the recording medium. The laser beam was so applied to the recording medium that its plane of polarization matched with the fast axis or the slow axis of the birefringent layer 3, to cause no rotation of the azimuth angle of the polarization by the birefringent layer 3 alone when no optical rotatory power took place in the recording layer 3. Consequently, no rotation of the azimuth angle of the polarization was detected.

Then, a beam of 325 nm in wavelength was applied to the same recording medium from an He-Cd laser, to bring the molecules the recording layer 2 into an excited state. Thereafter another laser beam was applied to the recording medium similarly to the above, and rotation of the azimuth angle of the polarization was measured. Consequently, rotation of the azimuth angle of the polarization was detected in the beam reflected from the recording medium.

For the purpose of comparison, a similar experiment was made on the conventional recording medium shown in Fig. 10, which was provided with no birefringent layer. This recording medium was similar in composition, size and forming method of each layer to the above example. Consequently, no rotation of the azimuth angle of the polarization was detected even if optical rotatory power was caused in the recording layer.

It has been confirmed from the above results that rotation of the azimuth angle of the polarization is caused in a reflected beam only when optical rotatory power is caused in a recording layer by providing a birefringent layer according to the present invention.

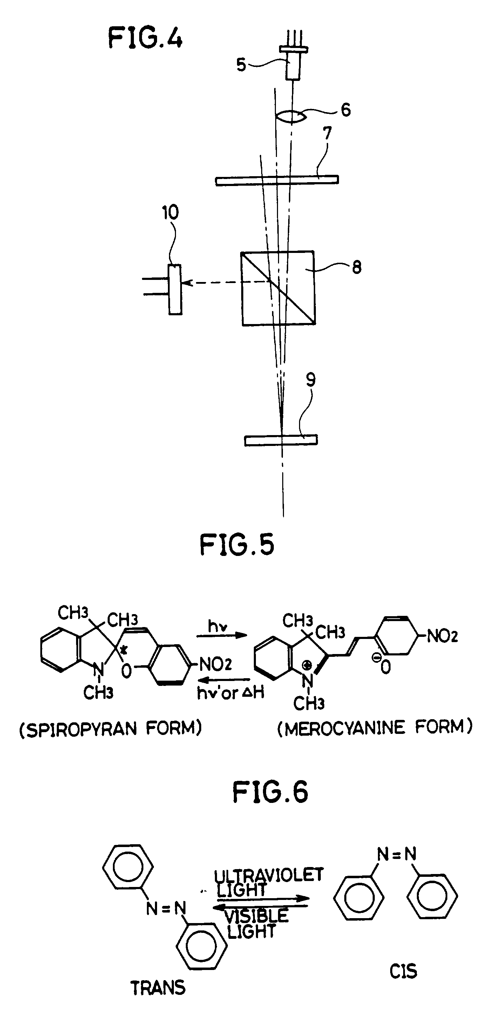

Fig. 4 schematically shows an exemplary optical system for reading information from the recording medium according to the present invention. Referring to Fig. 4, a collimator lens 6 is provided in front of a semiconductor laser 5, which emits a beam of 780 nm in wavelength. A polarizer 7 is provided in front of the collimator lens 6, in order to remove random-polarized spontaneous emission components from the beam emitted from the semiconductor laser 5. A polarizing beamsplitter 8 is provided in front of the polarizer 7 so that its transmission of polarization matches with the plane of polarization of a linearly polarized light beam through the polarizer 7, in order to entirely transmit the beam. A recording medium 9 is provided in front of the polarizing beamsplitter 8. An optical sensor 10 is provided on the side of the polarizing splitterbeam 8.

When no rotation of the azimuth angle of the polarization is caused in a beam reflected from the recording medium 9 in such an optical system, the reflected beam which is incident upon the polarizing splitterbeam 8 is entirely transmitted therethrough since the plane of polarization of the reflected beam matches with the transmission plane of polarization of the polarizing beamsplitter 8. Thus, the optical sensor 10 receives absolutely no beam, and outputs no signal. If the recording medium 9 causes rotation of the azimuth angle of the polarization in the reflected beam, on the other hand, the plane of polarization of this reflected beam is inclined with respect to the transmission plane of polarization of the polarizing splitterbeam 8, which in turn transversely reflects a beam corresponding to the value of a rectangular component of the beam with respect to the transmission plane of polarization. Thus, the optical sensor 10 outputs a signal whose level is responsive to the intensity of the laterally reflected beam.

In this case, it is preferable to set the semiconductor laser 5 and the recording medium 9 and arrangement of other optical elements in response thereto so that the plane of polarization of the beam from the semiconductor laser 5 matches with the fast axis or the slow axis of the birefringent layer 3, as hereinabove described. Thus, the plane of polarization of the beam incident upon the birefringent layer 3 is inclined with respect to the fast axis or the slow axis thereof only when optical rotatory power is caused in the recording layer 2. In other words, the aforementioned change of the polarized state is caused by the birefringent layer 3 only when the recording layer 2 has optical rotatory power.

In this optical system, the semiconductor laser 5 is so arranged that the beam outgoing from the semiconductor laser 5 is incident upon the recording medium 9 in a slightly inclined manner, in order to expel backward light to the semiconductor laser 5. However, it is not necessary to incline the axis of said beam when the same is prepared by a multimode laser, which is resistant against noise of backward light.

Spiropyran-derivative 1',3',3'-trimethyl-6-nitrospiro [2H-1-benzopyran-2,2'-indolin] (NBPS), a sort of a photochromic material, was employed as a material for a recording layer, which was subjected to an experiment similar to the above. Fig. 5 shows the chemical structures of this material. As shown in Fig. 5, the structure of this photochromic material is changed from a spiropyran form having optical rotatory power to a merocyanine form having no optical rotatory power by exposure to ultraviolet light, while the same is reversely changed from the merocyanine form to the spiropyran form by exposure to visible light.

This photochromic material was employed as a material for recording layers, to form the recording media shown in Figs. 1 and 10. As the result, no polarization rotation of a reflected beam was confirmed in the structure of the conventional recording medium shown in Fig. 10. In the inventive recording medium shown in Fig. 1, on the other hand, change in polarized state of a reflected beam was confirmed when the structure of the recording layer was brought into a spiropyran form having optical rotatory power.

A compound of azobenzenecarboxylic acid cholesterol ester, a sort of a photochromic material, was employed for a recording layer, which was subjected to an experiment similar to the above. In this photochromic material, an azobenzene group is changed from a trans form to a cis form by exposure to ultraviolet light (350 nm < λ < 400 nm), while the same is reversely changed from the cis form to the trans form by exposure to visible light (λ > 450 nm), as shown in Fig. 6. The material has large optical rotatory power when the same is in the cis form, while it exhibits no optical rotatory power when the same is in the trans form.

10 mg of this photochromic material, 100 mg of n-nonanoic acid cholesterol ester and 22 mg of cholesteryl chloride were dissolved in 0.2 ml of chloroform, and this solution was applied onto a substrate by a spin coating method. Then chloroform was evaporated to form a recording layer.

The recording layer was formed in the aforementioned manner, to prepare a recording medium having the structure shown in Fig. 1. Ultraviolet light was applied to this recording medium to change the recording layer into a cis form. When a linearly polarized light beam was applied to the recording medium which was changed into the state of the cis form, rotation of the azimuth angle of the polarization of a reflected beam was detected from the recording beam. No such rotation of the azimuth angle of the polarization was recognized when the recording layer was in a trans form.

In a recording layer of a photochromic material whose optical rotatory power is changed by exposure to light, the overall recording layer may not exhibit optical rotatory power even if its molecules are brought into a state having no optical rotatory power at the beginning and then exposed to random-polarized light to be brought into a state having optical rotatory power. This is because the recording layer is provided therein with the same amounts of molecules having rightward optical rotatory power of rightwardly rotating the plane of linear polarization of a reproducing beam and those having leftward optical rotatory power of leftwardly rotating the same. In this case, ultraviolet light of 325 nm in wavelength may be applied to the material shown in Fig. 2, for example, to bring its molecules into the state B, and thereafter two types of molecules which are opposite in optical rotatory power to each other may be separated by an optical isomer separation column or the like, to form a recording layer through either type of the separated molecules.

At this time, the recording layer is changed from a state having optical rotatory power to a state having no such power by exposure to light of about 550 nm in wavelength, whereby it is possible to detect change in optical rotatory power by reflected light by means of the structure of the inventive recording medium.

While various examples of the present invention have been described, the present invention is not restricted to such examples. For example, although three types of materials which are applicable to the recording layer have been described with respect to the aforementioned embodiment, it is also possible to use another material, whose optical rotatory power is changed by exposure to light or heat. It is also possible to use still another material, whose optical rotatory power is varied with change of an external field such as a magnetic field or an electric field.

Although the birefringent layer is prepared from a quarter-wave plate of artificial crystal in the aforementioned embodiment, the quarter-wave plate can alternatively be prepared from a material such as $TiO_2$, $CaCO_3$, $NaNO_3$ or the like. When $TiO_2$ is employed for forming a quarter-wave plate, its thickness can be reduced to 0.7 μm, which is about 1/30 that in the case of artificial crystal.

The birefringent layer is formed by a quarter-wave plate in the aforementioned embodiment. This means that the birefringent layer is set in such a thickness that its retardation is $\pi/2$ with respect to the waveband of the semiconductor laser beam. However, it is also possible to detect rotation of the azimuth angle of the polarization without setting the birefringent layer in such a thickness.

In the embodiment, further, the semiconductor laser is so arranged that the plane of polarization of the beam emitted from the semiconductor laser matches with the fast axis or the slow axis of the birefringent layer. However, it is possible to detect rotation of the azimuth angle of the polarization without arranging the semiconductor laser in such a manner.

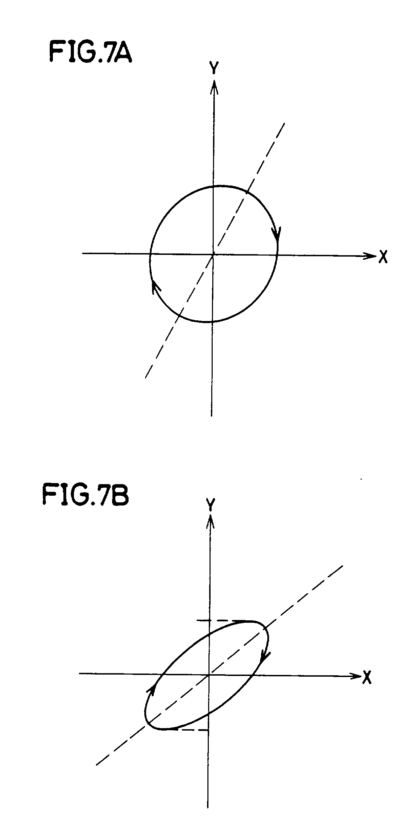

The aforementioned embodiment has shown a concrete example which can most easily detect rotation of the azimuth angle of the polarization. Therefore, it is also possible to detect rotation of the azimuth angle of the polarization by another method, so far as it is a complicated method. For example, it is possible to measure rotation of the azimuth angle of the polarization without setting the thickness of the birefringent layer of the recording medium to have the same action as a quarter-wave plate and/or without making the plane of polarization of the semiconductor laser beam match with the fast axis of the birefringent layer. As to a beam reflected from a recording medium, for example, the polarized state of an elliptically polarized light depends on whether or not the recording layer has optical rotatory power. Fig. 7A shows a state in relation to a recording layer having no optical rotatory power, and Fig. 7B shows a polarized state in relation to a recording layer having optical rotatory power. Since the polarized state of an elliptically polarized light is thus varied, it is possible to detect the state af a recording layer by forming an optical system which can detect intensity of the polarized component along the Y-axis shown in Fig. 7A, or 7B, for example.

Although the birefringent layer is provided between the recording layer and the reflecting layer in the above embodiment, the recording layer may be provided with not only the optical rotatory power but with the birefringent action, to serve as a recording/birefringent layer. According to such an embodiment, the structure of the recording medium can be more simplified since it is not necessary to separately provide the birefringent layer.

Such a recording/birefringent layer can be obtained by stretching a material having optical rotatory power, for example. It is known that a birefringent action is generally caused in a unidirectionally stretched material so that its fast axis or slow axis is in parallel with the direction of stretching. Therefore, it is possible to provide a material containing a material having optical rotatory power with both the optical rotatory power and the birefringent action by forming the same as a thin film and then unidirectionally stretching the thin film.

In accordance with to this embodiment, a recording medium having a recording/birefringent layer was prepared. The photochromic material shown in Fig. 5 was dissolved in a trichlorophenol solution to which polyethylene terephthalate (PET) was added, and this mixture was applied onto a glass substrate by a spin coating method in a thickness of 5 to 10 μm, thereby forming a recording film. Then, this recording film was separated from the glass substrate, and unidirectionally stretched to induce birefringence. This recording film was stuck onto a quartz substrate, to define a recording/birefringent layer.

An aluminum reflecting layer of 1000Å in thickness was formed on the recording/birefringent layer by vacuum deposition. Fig. 9 is a sectional view showing the as-formed recording medium according to the second embodiment of the present invention. Referring to Fig. 9, a recording/birefringent layer 12 is formed on a substrate 11, and a reflecting layer 13 is formed on the recording/birefringent layer 12.

The recording medium obtained in the aforementioned manner was employed for experimentally recording/reproducing information in the system shown in Fig. 4.

First, a beam at the wavelength of longer than 500 nm in wavelength was applied to the recording medium, to change the overall photochromic material contained in the recording/birefringent layer to a spiropyran form. A beam emitted from an incandescent lamp was filtered to extract the beam to be applied to the recording medium. The system shown in Fig. 4 was employed for applying the beam to the recording medium, while the output of the sensor 10 was measured.

Then, an ultraviolet laser beam was emitted to the recording medium from an He-Cd laser, to change the overall photochromic material contained in the recording/birefringent layer to a merocyanine form. The output of the sensor 10 was measured through the system shown in Fig. 4. In this measurement, the direction of a neutral axis of the recording/birefringent layer, i.e., the direction of stretching of the recording medium, was made to match with that in the preceding measurement.

In this experiment, difference was recognized in the output from the sensor. Thus, it has been confirmed that change of optical rotatory power can be detected by a beam reflected by the recording medium through the recording/birefringent layer having both the optical rotatory power and the birefringent action.

**Claims**

1. Recording medium comprising:
a recording layer (2) containing a material whose optical rotatory power is changed; and

   a reflecting layer (4) for reflecting a beam;
   **characterized** by
   a birefringent layer (3) provided between said recording layer (2) and said reflecting layer (4), whereby said reflecting layer (4) reflects said beam transmitted through said recording layer (2) and said birefringent layer (3) to re-introduce said beam into said birefringent layer (3) and said recording layer (2).

2. A recording medium in accordance with claim 1, wherein said birefringent layer (3) is formed by bringing a plate having a birefringent action into close contact with said recording layer (2).

3. A recording medium in accordance with claim 1, wherein said birefringent layer (3) has a columnar structure obliquely grown with respect to a substrate (1).

4. A recording medium in accordance with claim 1, wherein said recording layer (2) contains a material whose optical rotatory power is changed by application of light.

5. A recording medium in accordance with claim 1, wherein said recording layer (2) contains a material whose optical rotatory power is changed by heating.

6. A recording medium comprising:

   a recording layer (12) containing a material whose optical rotatory power is changed; and
   a reflecting layer (13) for reflecting a beam;
   **characterized** in that,
   said recording layer (12) is a birefringent layer adapted to change a state of the polarization of said beam, and wherein
   said reflecting layer (13) reflects said beam transmitted through said recording/birefringent layer (12) to re-introduce said beam into said recording/berefringent layer (12).

7. A recording medium in accordance with claim 6, wherein said recording/birefringent layer (12) is formed by unidirectionally stretching a thin film containing a material having optical rotatory power.

8. A recording medium in accordance with claim 7, wherein said recording/birefringent layer (12) further contains a polymer material.

9. A recording medium in accordance with claim 6, wherein said recording/birefringent layer (12) contains a material whose optical rotatory power is changed by application of light.

10. A recording medium in accordance with claim 6, wherein said recording/birefringent layer (12) contains a material whose optical rotatory power is changed by heating.

11. A method of reproducing information from a recording medium, comprising the steps of:

   applying a polarized light beam to a recording medium comprising a recording layer (2,12) containing a material whose optical rotatory power is changed, a birefringent layer (3,12) for changing a state of the polarization of said beam, and a reflecting layer (4,13) for reflecting said beam transmitted through said recording layer (2,12) and said birefringent layer (3,12) to reintroduce said beam into said birefringent layer (3,12) and said recording layer (2,12); and
   detecting change of a polarized state of said polarized light beam reflected from said recording medium thereby reading information recorded in said recording layer (2,12).

**12.** A method in accordance with claim 11, wherein a linearly polarized light beam is used as said polarized light beam, and said linearly polarized light beam is so applied to said recording medium that its plane of polarization matches with the direction of a neutral axis of said birefringent layer (3,12) .

**13.** A method in accordance with claim 11, wherein said birefringent layer (3,12) has such a thickness that its retardation is $\pi/2$ with respect to the waveband of said polarized light beam serving as a reproducing beam.

**14.** A method in accordance with claim 11, wherein a recording/birefringent layer (12) having an optical rotatory power and a birefringent action serves both as said recording layer and said birefringent layer.

**Patentansprüche**

1. Aufzeichnungsmedium mit:

    einer Aufzeichnungsschicht (2), die ein Material enthält, dessen optische, spezifische Drehung geändert ist; und einer reflektierenden Schicht (4) zum Reflektieren eines Strahls,
    dadurch **gekennzeichnet** daß
    zwischen der Aufzeichnungsschicht (2) und der reflektierenden Schicht (4) eine doppelbrechende Schicht (3) angeordnet ist, wodurch die reflektierende Schicht (4) den Strahl reflektiert, welcher durch die Aufzeichnungsschicht (2) und die doppelbrechende Schicht (3) durchgelassen worden ist, um diesen Strahl in die doppelbrechende Schicht (3) und die Aufzeichnungsschicht (2) zurückzuleiten.

2. Aufzeichnungsmedium nach Anspruch 1,
    wobei die doppelbrechende Schicht (3) dadurch gebildet ist, daß eine Platte mit einer doppelbrechenden Wirkung mit der Aufzeichnungsschicht (2) in engen Kontakt gebracht wird.

3. Aufzeichnungsmedium nach Anspruch 1,
    wobei die doppelbrechende Schicht (3) ein Stengelgefüge hat, das schräg zu einem Substrat (1) gewachsen ist.

4. Aufzeichnungsmedium nach Anspruch 1,
    wobei diese Aufzeichnungsschicht (2) ein Material enthält, dessen optische spezifische Drehung durch Beaufschlagen mit Licht geändert wird.

5. Aufzeichnungsmedium nach Anspruch 1, wobei die Aufzeichnungsschicht (2) ein Material enthält, dessen optische spezifische Drehung durch Erwärmen geändert wird.

6. Aufzeichnungsmedium mit:

    einer Aufzeichnungsschicht (12), die ein Material enthält, dessen optische spezifische Drehung geändert ist; und eine reflektierende Schicht (13) zum Reflektieren eines Strahls;
    dadurch **gekennzeichnet, daß**
    die Aufzeichnungsschicht (12) eine doppelbrechende Schicht ist, die so ausgebildet ist, daß sie den Polarisationszustand des Strahls ändert, und wobei
    die reflektierende Schicht (13) den Strahl reflektiert, der durch die Aufzeichnungs/doppelbrechende Schicht durchgelassen worden ist, um diesen Strahl in die Aufzeichnungs/doppelbrechende Schicht zurückzuleiten.

7. Aufzeichnungsmedium nach Anspruch 6,
    wobei die Aufzeichnungs/doppelbrechende Schicht (12) durch unidirektionales Strecken einer dünnen Folie, die ein Material mit optischer, spezifischer Drehung enthält, gebildet wird.

8. Aufzeichnungsmedium nach Anspruch 7,
    wobei die Aufzeichnungs/doppelbrechende Schicht (12) weiterhin ein Polymer-Material enthält.

9. Aufzeichnungsmedium nach Anspruch 6,
    wobei die Aufzeichnungs/doppelbrechende Schicht (12) ein Material enthält, dessen optische spezifische Drehung durch Beaufschlagen mit Licht geändert wird.

**10.** Aufzeichnungsmedium nach Anspruch 6,
wobei die Aufzeichnungs/doppelbrechende Schicht (12) ein Material enthält, dessen optische spezifische Drehung durch Erwärmen geändert wird.

**11.** Verfahren zum Reproduzieren von Information von einem Aufzeichnungsmedium mit den Schritten:

Beaufschlagen eines Aufzeichnungsmediums mit einem polarisierten Lichtstrahl, wobei das Aufzeichnungsmedium aufweist eine Aufzeichnungsschicht (2, 12), die ein Material enthält, dessen optische, spezifische Drehung geändert ist, eine doppelbrechende Schicht (3, 12) zum Ändern des Polarisationszustandes des Strahls, und eine reflektierende Schicht (4, 13) zum Reflektieren des durch die Aufzeichnungsschicht (2, 12) und die doppelbrechende Schicht (3, 12) durchgelassenen Strahls, um diesen Strahl in die doppelbrechende Schicht (3, 12) und die Aufzeichnungsschicht (2, 12) zurückzuleiten; und
Detektieren der Änderung des Polarisationszustandes des polarisierten Lichtstrahls, der an dem Aufzeichnungsmedium reflektiert wird, wobei die Information gelesen wird, die in der Aufzeichnungsschicht (2, 12) aufgezeichnet ist.

**12.** Verfahren nach Anspruch 11,
wobei als der polarisierte Lichtstrahl ein linear polarisierter Lichtstrahl verwendet wird, und der linear polarisierte Lichtstrahl das Aufzeichnungsmedium so beaufschlagt, daß seine Polarisationsebene zur Richtung der neutralen Achse der doppelbrechenden Schicht (3, 12) paßt.

**13.** Verfahren nach Anspruch 11,
wobei die doppelbrechende Schicht (12) eine solche Dicke aufweist, daß ihre Verzögerung $\pi/2$ ist, bezogen auf das Wellenband des polarisierten Lichtstrahls, der als Reproduktionsstrahl dient.

**14.** Verfahren nach Anspruch 11,
wobei eine Aufzeichnungs/doppelbrechende Schicht (12) eine optische spezifische Drehung und eine doppelbrechende Wirkung hat, die sowohl als Aufzeichnungsschicht als auch als doppelbrechende Schicht dient.

**Revendications**

**1.** Milieu d'enregistrement comprenant :
une couche d'enregistrement (2) contenant un matériau dont le pouvoir rotatoire optique change ; et
une couche réfléchissante (4) pour réfléchir un faisceau ;
**caractérisé** par

une couche biréfringente (3) placée entré la dite couche d'enregistrement (2) et la dite couche réfléchissante (4), ce par quoi
la dite couche réfléchissante (4) réfléchit le dit faisceau transmis à travers la dite couche d'enregistrement (2) et la dite couche biréfringente (3) pour réintroduire le dit faisceau dans la dite couche biréfringente (3) et la dite couche d'enregistrement (2).

**2.** Milieu d'enregistrement conforme à la revendication 1, dans lequel la dite couche biréfringente (3) est formée en plaçant une plaque possédant une action biréfringente en contact étroit avec la dite couche d'enregistrement (2).

**3.** Milieu d'enregistrement conforme à la revendication 1, dans lequel la dite couche biréfringente (3) présente une structure en colonnes obtenue par croissance oblique par rapport au substrat (1).

**4.** Milieu d'enregistrement conforme à la revendication 1, dans lequel la dite couche d'enregistrement (2) contient un matériau dont le pouvoir rotatoire optique est modifié par application de lumière.

**5.** Milieu d'enregistrement conforme à la revendication 1, dans lequel la dite couche d'enregistrement (2) contient un matériau dont le pouvoir rotatoire optique est modifié par chauffage.

**6.** Milieu d'enregistrement comprenant :
une couche d'enregistrement (12) contenant un matériau dont le pouvoir rotatoire optique change ; et
une couche réfléchissante (13) pour réfléchir un faisceau ;

**caractérisé** en ce que,

la dite couche d'enregistrement (12) est une couche biréfringente adaptée pour modifier l'état de polarisation du dit faisceau, et dans lequel
la dite couche réfléchissante (13) réfléchit le dit faisceau transmis à travers la dite couche d'enregistrement biréfringente (12) pour réintroduire le dit faisceau dans la dite couche d'enregistrement biréfringente (12).

7.  Milieu d'enregistrement conforme à la revendication 6, dans lequel la dite couche d'enregistrement biréfringente (12) est formée par étirement unidirectionnel d'un film mince contenant un matériau possédant un pouvoir rotatoire optique.

8.  Milieu d'enregistrement conforme à la revendication 7, dans lequel la dite couche d'enregistrement biréfringente (12) contient de plus un matériau polymère.

9.  Milieu d'enregistrement conforme à la revendication 6, dans lequel la dite couche d'enregistrement biréfringente (12) contient un matériau dont le pouvoir rotatoire optique est modifié par application de lumière.

10. Milieu d'enregistrement conforme à la revendication 6, dans lequel la dite couche d'enregistrement biréfringente (12) contient un matériau dont le pouvoir rotatoire optique est modifié par chauffage.

11. Méthode de reproduction de l'information provenant d'un milieu d'enregistrement, comprenant les étapes consistant à :

envoyer un faisceau de lumière polarisée sur un milieu d'enregistrement comprenant une couche d'enregistrement (2,12) contenant un matériau dont le pouvoir rotatoire optique est modifié, une couche biréfringente (3,12) pour changer l'état de la polarisation du dit faisceau, et une couche réfléchissante (4,13) pour réfléchir le dit faisceau transmis à travers la dite couche d'enregistrement (2,12) et la dite couche biréfringente (3,12) pour réintroduire le dit faisceau dans la dite couche biréfringente (3,12) et la dite couche d'enregistrement (2,12) ; et détecter le changement d'état de polarisation du dit faisceau de lumière polarisée réfléchi par le dit milieu d'enregistrement, lisant de cette manière l'information enregistrée dans le dit milieu d'enregistrement (2,12).

12. Méthode conforme à la revendication 11, dans laquelle un faisceau de lumière polarisée linéairement est utilisé comme dit faisceau de lumière polarisée, et le dit faisceau de lumière polarisée linéairement est envoyé sur le dit milieu d'enregistrement de telle sorte que son plan de polarisation coïncide avec la direction de l'axe neutre de la dite couche biréfringente (3,12).

13. Méthode conforme à la revendication 11, dans laquelle la dite couche biréfringente (3,12) présente une épaisseur telle que son déphasage en retard soit de $\pi/2$ par rapport à la bande d'onde du dit faisceau de lumière polarisée utilisé comme faisceau de reproduction.

14. Méthode conforme à la revendication 11, dans laquelle une couche d'enregistrement biréfringente (12) possédant un pouvoir rotatoire optique et une action biréfringente sert à la fois de dite couche d'enregistrement et de de dite couche biréfringente.

# FIG.1

# FIG.2

A
(GROUND STATE)

B
(EXCITED STATE)

# FIG.3

ABSORBANCE

WAVELENGTH (nm)

14

# FIG.4

# FIG.5

(SPIROPYRAN FORM)     (MEROCYANINE FORM)

# FIG.6

TRANS     CIS

FIG.7A

FIG.7B

FIG.8A

FIG.8F

FIG.8B

FIG.8E

FIG.8C

FIG.8D

# FIG.9

# FIG.10

FIG.11A

FIG.11B

FIG.11C

FIG.11D